# EUROPEAN PATENT SPECIFICATION

(11) **EP 3 524 451 B1**
(45) Date of publication and mention of the grant of the patent: **15.06.2022**
(21) Application number: 19156538.1
(22) Date of filing: 11.02.2019
(51) Int. Cl.: B60G 15/06, F16F 9/54, B60G 13/00, F16F 1/12, F16F 13/00

(54) **TOP MOUNT FOR A SHOCK ABSORBER AND MOUNT GROUP**
STÜTZLAGER FÜR FÜR EINEN STOSSDÄMPFER UND BAUGRUPPE
SUPPORT SUPÉRIEUR POUR UN AMORTISSEUR ET GROUPE DE MONTAGE

(30) Priority: 13.02.2018 IT 201800002635
(43) Date of publication of application: 14.08.2019
(73) Proprietor: DTR VMS Italy S.r.l., 25050 Passirano, BRESCIA (IT)
(72) Inventor: INHWAN, Kim, I-25050 Passirano, BRESCIA (IT); GAZZOLI, Gianenrico, I-25050 Passirano, BRESCIA (IT); PASQUINI, Luigi, I-25050 Passirano, BRESCIA (IT)
(74) Representative: Chimini, Francesco

(56) References cited:
- EP-A1- 2 110 273
- DE-A1-102009 020 985
- DE-A1-102013 021 960
- DE-A1-102015 219 168
- FR-A1- 2 972 663
- US-A- 4 434 977
- US-A- 6 161 822

## Description

The present invention relates in general to systems for fixing vehicle shock absorbers or suspensions to the body of the vehicle. The background art is disclosed in documents US 4 434 977 A, DE 10 2009 020985 A1, US 6 161 822 A and DE 10 2013 021960 A1.

In particular, the present invention relates to a top shock absorber mount for attaching the shock absorber to the body of the motor vehicle, for example to a dome of the body in the case of suspensions of McPherson type. Furthermore, the invention is also directed to a mount group suitable for being inserted in the top shock absorber mount.

It is known in the art to provide a top shock absorber mount which includes a mount group on which the shock absorber rod is anchored and comprising an elastic rubber element, having the function of filtering the vibrations which could be transmitted from the shock absorber to the body.

In the suspension, although the shock absorber and the top mount are closely linked components, they perform two different functions. The small-stroke stresses are transmitted to the elastic element and the relative vibrations are then absorbed by the element itself, while for higher displacements the shock absorber intervenes and the elastic rubber element takes the function of an additional filter.

Generally, the geometrical shape and the specific components of the mount group and/or or of the top shock absorber mount vary according to the vehicle, in order to adapt to the specific static and dynamic features of the vehicle itself and of the shock absorbers.

Disadvantageously, this entails an enormous use of resources for the specific design of the molds for the construction of the mount group or of the elastic element or of the entire top mount and an extension of the times for reaching the final production for the specific vehicle.

Moreover, the top shock absorber mounts of the prior art may suffer from cracks at the attachment between the shock absorber rod and the mount group.

The need is therefore felt to provide a top shock absorber mount which is capable of overcoming the drawbacks of the prior art and which may be adapted in a simpler and less costly manner to different types of vehicle, possibly with only minor modifications of the production molds. Furthermore, the need is felt to improve the strength of the top mount at the attachment between the shock absorber rod and the mount group.

According to the invention, the aforesaid objects are achieved by a mount group for a top mount of a shock absorber and by a method of construction and assembly according to the appended independent claims. Preferred embodiments of the invention are defined in the dependent claims.

The features and the advantages of the top mount and of the mount group will appear more clearly from the following description, made by way of an indicative and non-limiting example with reference to the accompanying figures, in which:
- figure 1 shows a perspective view of a top shock absorber mount installed on a vehicle frame according to an embodiment of the present invention;

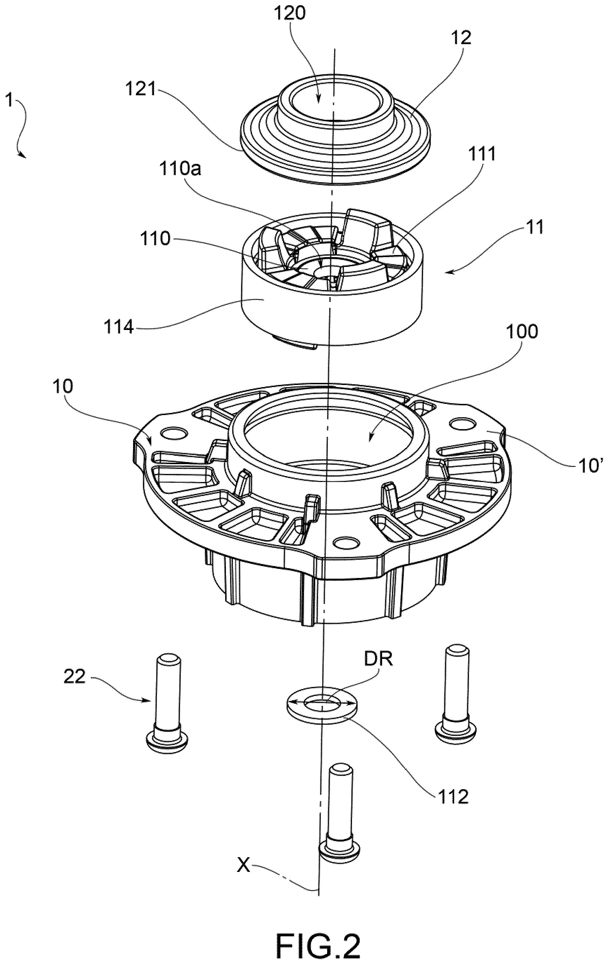

- figure 2 is a perspective view of an exploded view of a top shock absorber mount according to an embodiment of the present invention;

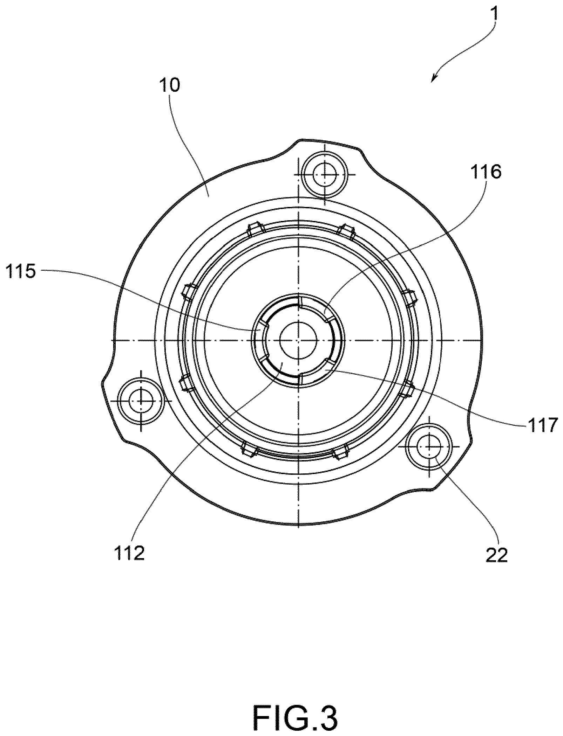

- figure 3 shows a plan view from below of a top shock absorber mount according to an embodiment of the present invention;
- figure 4 shows a sectional view of a top shock absorber mount according to an embodiment of the present invention installed on a vehicle frame, in which a shock absorber is also visible;

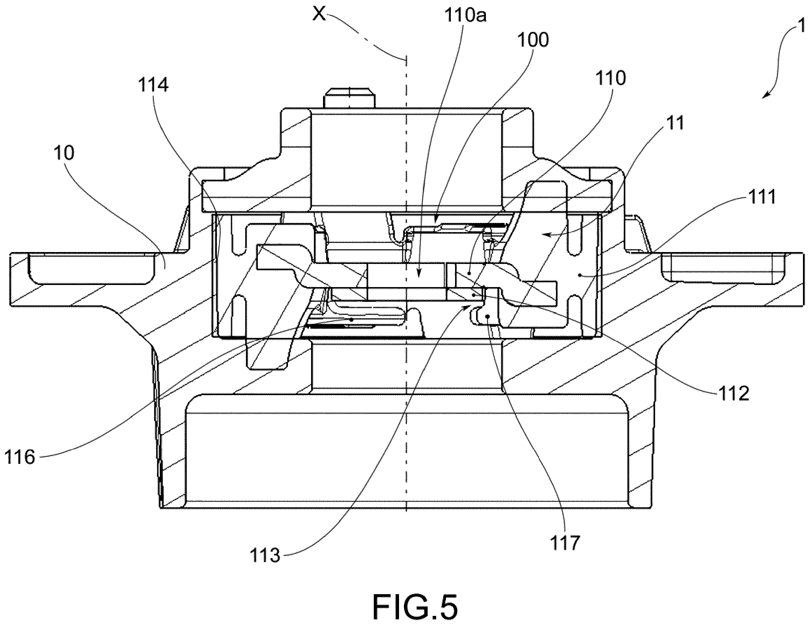

- figure 5 shows the sectional view of figure 4 in which the shock absorber and the frame of the vehicle have been fictitiously removed for the purpose of illustrative clarity.

According to the accompanying figures, reference numeral 1 indicates as a whole a top mount 1 for connecting a shock absorber 3 to a frame 2 of a vehicle, in particular of a motor vehicle.

The top mount 1 comprises a support 10 comprising a housing 100 arranged around a shock absorber axis X. Such a support 10 can be anchored to the vehicle frame 2 and, for example, is a metal structure obtained by die-casting in which the housing is formed. Preferably, the support 10 comprises an annular flange 10' intended to be anchored to the vehicle frame, for example to the dome 21 of the frame 2, preferably by means of suitable screw or bolt fixing means 22.

Preferably, the support 10 is suitable for receiving directly or indirectly the action of a helical spring 32 arranged coaxially with the shock absorber axis X.

The top mount 1 comprises a mount group 11 received at least partially or totally in the housing 100 and locked in said housing 100, for example by interference with the walls of the housing 100 or by fastening means known to the man skilled in the art.

The mount group 11 comprises a connecting element 110 suitable to be connected to a rod 31 of the shock absorber 3 and comprises a rod hole 110a suitable to house the rod 31 of the shock absorber 3.

A resilient element 111 is arranged coaxially to the shock absorber axis X and at least partially incorporates the connecting element 110.

In particular, the resilient element 111 incorporates only an annular peripheral portion 110' of the connecting element.

In one embodiment, the mount group 11 comprises an external annular wall 114 fixed to the resilient element 111 and made of a plastic material different from the material of the resilient element 111, so as to give strength to the mount group 11.

In an advantageous embodiment, the locking of the mount group 11 into the housing 100 takes place by means of a closing element 12, arranged coaxially with the shock absorber axis X and comprising a central through hole 120 to allow access to the rod 31 of the shock absorber stem 3. Said closing element 12 is fixed in the housing 100 by mechanical interference and comprises a base 121, for example of circular shape, adapted to act on the mount group 11 and/or directly on the resilient element 111 to keep it locked in the housing 100. In one embodiment of this variant, the mount group 11 is inserted with a slight interference in the housing 100 and locking is ensured by the closing element.

Preferably, the connecting element 110 is a metal plate, comprising a plurality of sigmoidal ends 110", 110‴, which extend in a radial direction Y perpendicular to the shock absorber axis X. These sigmoid ends 110", 110‴ are preferably obtained by drawing and are arranged coaxially with respect to the shock absorber axis X and are equally spaced circumferentially, for example by an angle of about 120°.

The mount group 11 further comprises a reinforcing element 112, for example a washer, suitable to be interposed and clamped between an abutment surface 310 of the rod 31 of the shock absorber 3 and a lower surface 110b of the connecting element 110.

In such a mount group 11 there is formed a coupling seat 113 shaped to house the reinforcing element 112 loosely and prevent the reinforcing element 112 from coming out of its seat 113 once inserted therein.

In one embodiment, the connecting element 110 and the reinforcing element 112 are made of metal and the resilient element is made of a polymeric material, preferably rubber. In this manner, the stresses transmitted by the rod 31 on the connecting element are filtered by the resilient element 111 before being transmitted to the support 10 and, therefore, to the vehicle frame 2.

Moreover, preferably, the connecting element 110 is made of a different material with respect to the material with which the reinforcing element 112 is made.

The presence of the reinforcing element 112 imparts a better distribution of the forces acting on the connecting element 110 due to the stresses of the rod 31, thus ensuring an improved resistance of this element 110 and of the whole mount group 11.

In a particularly advantageous variant of the invention, the reinforcing element 112 is a washer having a diameter DR greater than the external diameter D of the abutment surface 310 of the rod 31 on which said washer is in abutment when it is held and locked between the rod 31 and the connecting element 110.

Preferably, therefore, the reinforcing element is a washer having a diameter greater than the greater external diameter D of the rod 31. The presence of a washer surface with a diameter greater than the diameter of the abutment surface 310 of the rod allows distributing the stresses coming from the rod 31 to the connecting element on a larger surface, redistributing and therefore reducing the stresses in the connecting element 110.

In an even more advantageous manner, an embodiment variant of the invention provides that the connecting element 110 is made of S420 steel and the reinforcing element 112 is made of S600 steel, according to the EN 10149-2 standard. In this way, in a synergistic manner, the S420 steel allows easily obtaining the drawing of the connecting element S420, difficult to obtain with an S600 steel, and at the same time the reinforcement element 112 in S600 steel imparts greater resistance to the stresses, otherwise not tolerable by S420 steel.

According to the invention, the coupling seat 113 is further shaped to house the reinforcing element 112 loosely, so as to allow the movement of the reinforcing element 112 towards the support against the lower surface 110b of the connecting element 110, for example along the direction of the shock absorber axis X.

The coupling seat 113 is further shaped for the "snap" fitting of the reinforcing element 112 in the coupling seat 113.

In particular, in one embodiment, the mount group 11 comprises protuberances 115, 116, 117, wherein at least one protuberance of said protuberances 115, 116, 117 or all protuberances 115, 116, 117 extend inside the housing 100. Furthermore, one or all of the protuberances 115, 116, 117 define at least partially the coupling seat 113 and are adapted to prevent the outflow of the reinforcing element 112 from the coupling seat 113.

Preferably, the protuberances are formed in one piece from the resilient element 111.

In a preferred embodiment variant, the protuberances 115, 116, 117 are arranged circumferentially about the cylinder axis X and are spaced circumferentially from each other.

In another embodiment (not shown in the figure) the protuberances are joined together to form a single annular protuberance. In other words, the aforesaid variant embodiment comprises a single annular protuberance formed in one piece with the resilient element 112.

It is also clear that the mount group 11 is also an object of the present invention, comprising the connecting element 110, the resilient element 111 and the reinforcing element 112 as described previously in this discussion.

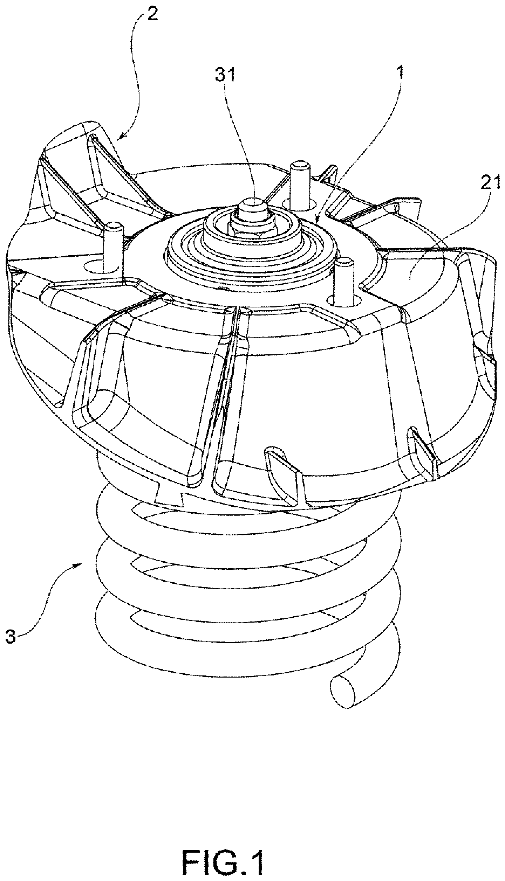

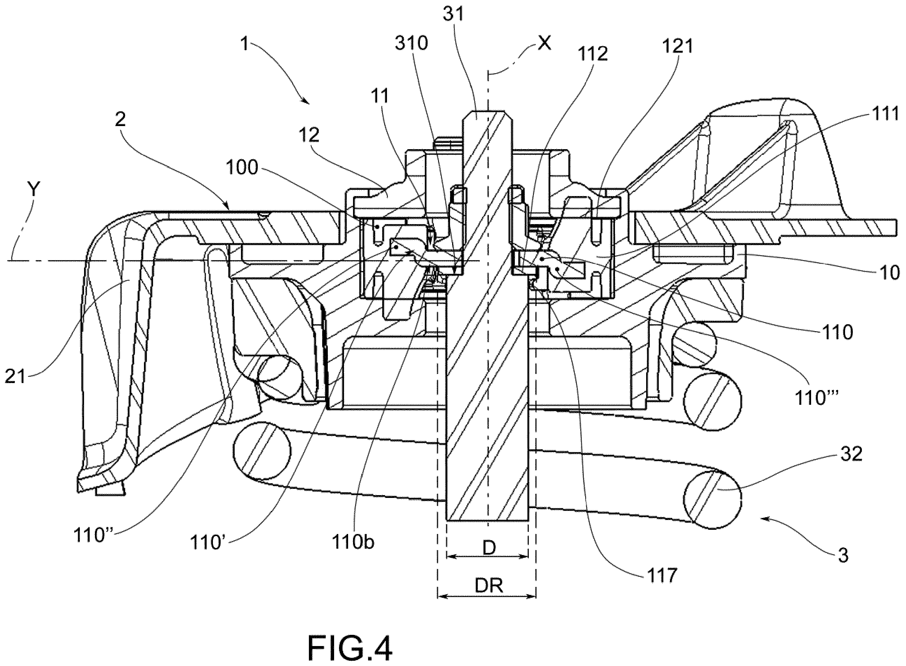

Furthermore, it is also an object of the present invention a shock absorber assembly, for example partially shown in figure 1 and in figure 4, comprising a shock absorber 3 and the top mount 1, wherein the shock absorber 3 comprises the rod 31 and a helical spring 32 arranged substantially coaxially to the rod 31 and in direct or indirect support with the support 10. The rod 31 is constrained to the connecting element 110, preferably by means of a screw-lock nut coupling. Moreover, the reinforcing element 112 is interposed and locked between an abutment surface 310 of the rod 31 of the shock absorber 3 and the lower surface 110b of the connecting element 110.

It is also the object of the present invention a method of manufacturing and assembling the top mount 1 for the shock absorber. The method comprises the following steps:
a) providing a support 10 comprising a housing 100 arranged around a shock absorber axis X, said support 10 being anchorable to the frame 2 of a vehicle;
b) inserting into the housing 100 a mount group comprising a resilient element 111 arranged coaxially to a shock absorber axis X and a connecting element 110 at least partly incorporated in the resilient element 111 and suitable to be connected to a rod 31 of the shock absorber 3;
c) locking the mount group 11 in the housing 100;
d) snap-fitting a reinforcing element 112 for example a washer, in a coupling seat 113 formed in the mount group and shaped to house the reinforcing element 112 so as to prevent the reinforcing element 112 from coming out of its seat 113 once inserted therein.

In an advantageous variant of the method, step c) provides for inserting the closing element 12 in the housing 100 by mechanical interference such that said closing element 12 acts on the mount group 11 to keep it locked in the housing.

According to the invention, step d) provides for snap-fitting the reinforcing element in the coupling seat 113. In this way, it is possible to insert the reinforcing element, that is, for example the washer, by an automated snap-in operation by means of a pressure element, after the assembly steps of the mount group 11 on the support 10 have been completed, without having to modify the assembly chain of the mount group on the existing support.

Innovatively, the top mount for shock absorber according to the present invention allows greater versatility and adaptability of use with different types of vehicles in a simple and less expensive manner. In fact, due to the presence of a reinforcing element (for example a washer) between the rod and the connecting element it is possible to vary the resistance of the coupling between the shock absorber rod and the connecting element. This allows adapting the same resilient element and the same connecting element to different types of vehicles. In fact, adaptability is guaranteed by the insertion of the specific reinforcing element which guarantees the appropriate resistance features for a specific vehicle. It is therefore not necessary to completely redesign the mold for making the mount group, but it is sufficient to determine the appropriate features of the reinforcing element for the specific vehicle. At the same time, the presence of the reinforcing element, being an element interposed between the rod and the connecting element with the rod, gives greater mechanical resistance and greater strength against possible breaking of the connecting element near the coupling with the rod.

Furthermore, once the reinforcing element is inserted in its coupling seat, it remains trapped in the mount group, allowing the top mount to be transported and installed on the vehicle's shock absorber without the risk of the reinforcing element being dispersed.

Furthermore, due to the possibility of inserting the snap-on reinforcing element in the coupling seat, it is possible to assemble the entire top mount without having to modify the already existing automated production and assembly processes of the top mount. In fact, once the mount group has been assembled on the support 10 in an automated manner, the reinforcing element can be easily inserted by snap.

Advantageously, and in an immediate manner, it is possible to vary the production process of a top mount according to the type of vehicle, replacing each time only the type of reinforcing element, without the need to change the production molds relative to the other elements of the top mount (connecting element and resilient element).

Furthermore, advantageously, the loose housing of the reinforcing element inside the coupling seat allows simplifying the operations of making the top mount and at the same time allows a secure abutment support of the reinforcing element against the rod and against the connecting element during installation on the shock absorber.

It is clear that a man skilled in the art may make changes to the invention described above in order to meet incidental needs, all falling within the scope of protection defined in the following claims.

## Claims

1. Mount group (11) for a top mount (1) of a shock absorber (3), said mount group (11) being suitable to be housed at least partly or totally in a housing (100) of the top mount (1) of the shock absorber (1) and to be locked in said housing (100),
wherein said mount group (11) comprises
- a connecting element (110) suitable to be connected to a rod (31) of the shock absorber (3) and comprising a rod hole (110a) suitable to house the rod (31) of the shock absorber (3);
- a resilient element (111) arranged coaxially to the shock absorber axis (X) and which at least partially incorporates the connecting element (110);
- a reinforcing element (112), for example a washer, suitable to be interposed and clamped between an abutment surface (310) of the rod (31) of the shock absorber (3) and a lower surface (110b) of the connecting element (110),
wherein in said mount group (11) there is formed a coupling seat (113) shaped to house the reinforcing element (112) and prevent the reinforcing element (112) from coming out of its seat (113) once inserted therein,
said mount group (11) being **characterized in that** the coupling seat (113) is further shaped to house the reinforcing element (112) loosely, so as to allow the movement of the reinforcing element (112) towards the support against the lower surface (110b) of the connecting element (110) .

2. Top mount (1) for connecting a shock absorber (3) to a frame (2) of a vehicle, in particular a motor vehicle, said top mount (1) comprising:
- a support (10) comprising a housing (100) arranged around a shock absorber axis (X), said support (10) being anchorable to the frame (2) of the vehicle;
- a mount group (11) according to claim 1, housed at least partly or totally in the housing (100) and locked in said housing (100),
wherein the reinforcing element (112) is housed in said coupling seat (113) loosely .

3. Top mount (1) according to claim 2, wherein the reinforcing element (112) is a washer having a diameter (DR) greater than the diameter (D) of the abutment surface (310) of the rod (31) on which said washer is in abutment when it is held and locked between the rod (31) and the connecting element (110).

4. Top mount (1) according to any one of the claims 2 or 3, wherein the coupling seat (113) is further shaped for the snap-fitting of the reinforcing element (112) in the coupling seat (113).

5. Top mount (1) according to any one of the claims from 2 to 4, wherein the mount group (11) comprises protuberances (115, 116, 117), wherein at least one protuberance of said protuberances (115, 116, 117) projects inside the housing (100) and wherein one or all protuberances at least partially define the coupling seat (113) and are adapted to prevent the reinforcing element (112) from coming out of said coupling seat (113).

6. Top mount (1) according to any one of the claims from 2 to 5, wherein the protuberances are formed in one piece on the resilient element (111).

7. Top mount (1) according to any one of claims 5 or 6, wherein the protuberances (115, 116, 117) are arranged circumferentially about the cylinder axis (X) and are spaced circumferentially from each other.

8. Top mount (1) according to any one of the claims from 2 to 7, wherein the connecting element (110) and the reinforcing element (112) are made of metal and the resilient element is made of a polymeric material, preferably rubber.

9. Top mount (1) according to any one of the claims from 2 to 8, wherein the connecting element (110) is made of a different material with respect to the material with which the reinforcing element (112) is made.

10. Top mount (1) according to claim 9, wherein the material of the connecting element (110) is S420 steel and the material of the reinforcing element (112) is S600 steel.

11. Top mount (1) according to any one of the claims from 2 to 10, wherein the mount group (11) comprises an external annular wall (114) fixed to the resilient element (111) and made of a plastic material different from the material of the resilient element (111).

12. Top mount (1) according to any one of the claims from 2 to 11, further comprising a closing element (12), arranged coaxially to the shock absorber axis (X) and comprising a central through hole (120) to allow access to the rod (31) of the shock absorber (3), wherein said closing element (12) is fixed in the housing (100) by mechanical interference and wherein said closing element (12) comprises a base (121), for example circular, suitable to act on the resilient element (111) to keep it locked in the housing.

13. Shock absorber assembly, comprising a shock absorber (3) and a top mount (1) according to any one of claims 2 to 12, wherein the shock absorber (3) comprises a rod (31) and a helical spring (32) arranged substantially coaxially to the rod (31) and supported directly or indirectly with the support (10),
wherein the rod (31) is constrained to the connecting element (110), preferably by means of a screw-lock nut coupling, and wherein the reinforcing element (112) is interposed and locked between the abutment surface (310) of the rod (31) of the shock absorber (3) and the lower surface (110b) of the connecting element (110).

14. Method of construction and assembly of a top mount according to any of the claims 2 to 12, comprising the steps of:
a) providing a support (10) comprising a housing (100) arranged around a shock absorber axis (X), said support (10) being anchorable to the frame (2) of a vehicle;
b) inserting into the housing (100) a mount group comprising a resilient element (111) arranged coaxially to a shock absorber axis (X) and a connecting element (110) at least partly incorporated in the resilient element (111) and suitable to be connected to a rod (31) of the shock absorber (3) ;
c) locking the mount group (11) in the housing (100);
d) snap-fitting a reinforcing element (112), for example a washer, in a coupling seat (113) formed in the mount group and shaped to house the reinforcing element (112) so as to prevent the reinforcing element (112) from coming out of its seat (113) once inserted therein.

15. Method of construction according to claim 14, wherein the step c) provides for inserting a closing element (12) in the housing (100) by mechanical interference such that said closing element (12) acts on the mount group (11) to keep it locked in the housing.

## Patentansprüche

1. Halterungsgruppe (11) für eine obere Halterung (1) eines Stoßdämpfers (3), wobei die Halterungsgruppe (11) geeignet ist, zumindest teilweise oder vollständig in einem Gehäuse (100) der oberen Halterung (1) des Stoßdämpfers (1) untergebracht zu sein und in dem Gehäuse (100) verriegelt zu sein,
wobei die Halterungsgruppe (11) umfasst
- ein Verbindungselement (110), das geeignet ist, mit einer Stange (31) des Stoßdämpfers (3) verbunden zu sein, und das ein Stangenloch (110a) umfasst, das geeignet ist, die Stange (31) des Stoßdämpfers (3) unterzubringen;
- ein rückstellfähiges Element (111), das koaxial zu der Stoßdämpferachse (X) angeordnet ist und welches das Verbindungselement (110) zumindest teilweise enthält bzw. aufnimmt;
- ein Verstärkungselement (112), zum Beispiel eine Unterlegscheibe, das geeignet ist, zwischen einer Anlagefläche (310) der Stange (31) des Stoßdämpfers (3) und einer unteren Fläche (110b) des Verbindungselements (110) angeordnet und festgeklemmt zu sein,
wobei in der Halterungsgruppe (11) ein Kopplungssitz (113) ausgebildet ist, der so geformt ist, dass er das Verstärkungselement (112) unterbringt und verhindert, dass das Verstärkungselement (112) aus seinem Sitz (113) herauskommt, sobald es einmal darin eingesetzt ist,
wobei die Halterungsgruppe (11) **dadurch gekennzeichnet ist, dass** der Kopplungssitz (113) ferner so geformt ist, dass er das Verstärkungselement (112) lose unterbringt, um die Bewegung des Verstärkungselements (112) zu der Stütze bzw. dem Träger hin gegen die untere Fläche (110b) des Verbindungselements (110) zu ermöglichen.

2. Obere Halterung (1) zum Verbinden eines Stoßdämpfers (3) mit einem Rahmen (2) eines Fahrzeugs, insbesondere eines Kraftfahrzeugs, wobei die obere Halterung (1) umfasst:
- eine Stütze bzw. einen Träger (10), die bzw. der ein Gehäuse (100) umfasst, das um eine Stoßdämpferachse (X) herum angeordnet ist, wobei der Träger (10) an dem Rahmen (2) des Fahrzeugs verankerbar ist;
- eine Halterungsgruppe (11) nach Anspruch 1, die zumindest teilweise oder vollständig in dem Gehäuse (100) untergebracht und in dem Gehäuse (100) verriegelt ist,
wobei das Verstärkungselement (112) lose in dem Kopplungssitz (113) untergebracht ist.

3. Obere Halterung (1) nach Anspruch 2, wobei das Verstärkungselement (112) eine Unterlegscheibe mit einem Durchmesser (DR) ist, der größer als der Durchmesser (D) der Anlagefläche (310) der Stange (31) ist, auf welcher die Unterlegscheibe anliegt, wenn sie zwischen der Stange (31) und dem Verbindungselement (110) gehalten und verriegelt ist.

4. Obere Halterung (1) nach einem der Ansprüche 2 oder 3, wobei der Kopplungssitz (113) ferner für die Schnapppassung bzw. das Einschnappen des Verstärkungselements (112) in den Kopplungssitz (113) geformt ist.

5. Obere Halterung (1) nach einem der Ansprüche 2 bis 4, wobei die Halterungsgruppe (11) Vorsprünge (115, 116, 117) umfasst, wobei zumindest ein Vorsprung der Vorsprünge (115, 116, 117) in das Gehäuse (100) vorsteht und wobei einer oder alle Vorsprünge den Kopplungssitz (113) zumindest teilweise definieren und angepasst sind, zu verhindern, dass das Verstärkungselement (112) aus dem Kopplungssitz (113) herauskommt.

6. Obere Halterung (1) nach einem der Ansprüche 2 bis 5, wobei die Vorsprünge einstückig an dem rückstellfähigen Element (111) ausgebildet sind.

7. Obere Halterung (1) nach einem der Ansprüche 5 oder 6, wobei die Vorsprünge (115, 116, 117) umfangsmäßig um die Zylinderachse (X) herum angeordnet und umfangsmäßig voneinander beabstandet sind.

8. Obere Halterung (1) nach einem der Ansprüche 2 bis 7, wobei das Verbindungselement (110) und das Verstärkungselement (112) aus Metall bestehen und das rückstellfähige Element aus einem Polymermaterial, vorzugsweise Gummi, besteht.

9. Obere Halterung (1) nach einem der Ansprüche 2 bis 8, wobei das Verbindungselement (110) aus einem anderen Material besteht als das Material, aus dem das Verstärkungselement (112) besteht.

10. Obere Halterung (1) nach Anspruch 9, wobei das Material des Verbindungselements (110) S420 Stahl ist und das Material des Verstärkungselements (112) S600 Stahl ist.

11. Obere Halterung (1) nach einem der Ansprüche 2 bis 10, wobei die Halterungsgruppe (11) eine äußere bzw. externe ringförmige Wand (114) umfasst, die an dem rückstellfähigen Element (111) befestigt ist und aus einem Kunststoffmaterial besteht, das sich von dem Material des rückstellfähigen Elements (111) unterscheidet.

12. Obere Halterung (1) nach einem der Ansprüche 2 bis 11, ferner umfassend ein Schließelement (12), das koaxial zu der Stoßdämpferachse (X) angeordnet ist und ein zentrales Durchgangsloch (120) zum Ermöglichen des Zugangs zu der der Stange (31) des Stoßdämpfers (3) umfasst, wobei das Schließelement (12) in dem Gehäuse (100) durch mechanischen Eingriff befestigt ist und wobei das Schließelement (12) eine beispielsweise kreisförmige Basis (121) umfasst, die geeignet ist, auf das rückstellfähige Element (111) einzuwirken, um es in dem Gehäuse verriegelt zu halten.

13. Stoßdämpferanordnung, umfassend einen Stoßdämpfer (3) und eine obere Halterung (1) nach einem der Ansprüche 2 bis 12, wobei der Stoßdämpfer (3) eine Stange (31) und eine Schraubenfeder (32) umfasst, die im Wesentlichen koaxial zu der Stange (31) angeordnet ist und direkt oder indirekt mit dem Träger (10) gestützt bzw. getragen ist,
wobei die Stange (31) an dem Verbindungselement (110) gehalten ist, vorzugsweise mittels einer Schraubensicherung-Mutter-Kopplung, und wobei das Verstärkungselement (112) zwischen der Anlagefläche (310) der Stange (31) des Stoßdämpfers (3) und der unteren Fläche (110b) des Verbindungselements (110) angeordnet und verriegelt ist.

14. Konstruktions- und Montageverfahren einer oberen Halterung nach einem der Ansprüche 2 bis 12, umfassend die Schritte:
a) Bereitstellen einer Stütze bzw. eines Trägers (10), die bzw. der ein um eine Stoßdämpferachse (X) angeordnetes Gehäuse (100) umfasst, wobei der Träger (10) an dem Rahmen (2) eines Fahrzeugs verankerbar ist;
b) Einsetzen, in das Gehäuse (100), einer Halterungsgruppe, umfassend ein koaxial zu einer Stoßdämpferachse (X) angeordnetes rückstellfähiges Element (111) und ein Verbindungselement (110), das zumindest teilweise in dem rückstellfähigen Element (111) enthalten ist und geeignet ist, mit einer Stange (31) des Stoßdämpfers (3) verbunden zu werden;
c) Verriegeln der Halterungsgruppe (11) in dem Gehäuse (100);
d) Einschnappen bzw. Schnapppassen eines Verstärkungselements (112), beispielsweise einer Unterlegscheibe, in einen Kopplungssitz (113), der in der Halterungsgruppe ausgebildet ist und so geformt ist, dass er das Verstärkungselement (112) unterbringt, um zu verhindern, dass das Verstärkungselement (112) aus seinem Sitz (113) kommt, sobald es einmal darin eingesetzt ist.

15. Konstruktionsverfahren nach Anspruch 14, wobei der Schritt c) vorsieht, ein Schließelement (12) in das Gehäuse (100) durch mechanisches Eingreifen derart einzusetzen, dass das Schließelement (12) auf die Halterungsgruppe (11) einwirkt, um sie in dem Gehäuse verriegelt zu halten.

## Revendications

1. Groupe de montage (11) pour un support supérieur (1) d'un amortisseur (3), ledit groupe de montage (11) étant apte à être logé au moins partiellement ou totalement dans un logement (100) du support supérieur (1) de l'amortisseur (1) et à être verrouillé dans ledit logement (100),
dans lequel ledit groupe de montage (11) comprend
- un élément de liaison (110) apte à être relié à une tige (31) de l'amortisseur (3) et comprenant un trou de tige (110a) apte à loger la tige (31) de l'amortisseur (3) ;
- un élément élastique (111) agencé de manière coaxiale à l'axe d'amortisseur (X) et qui incorpore au moins partiellement l'élément de liaison (110) ;
- un élément de renforcement (112), par exemple une rondelle, apte à être interposé et serré entre une surface de butée (310) de la tige (31) de l'amortisseur (3) et une surface inférieure (110b) de l'élément de liaison (110),
dans lequel, dans ledit groupe de montage (11), il est formé un siège de couplage (113) façonné pour loger l'élément de renforcement (112) et interdire à l'élément de renforcement (112) de sortir de son siège (113) une fois qu'il est inséré à l'intérieur de celui-ci,
ledit groupe de montage (11) étant **caractérisé en ce que** le siège de couplage (113) est en outre façonné pour loger l'élément de renforcement (112) de manière lâche, afin de permettre le déplacement de l'élément de renforcement (112) vers le support contre la surface inférieure (110b) de l'élément de liaison (110).

2. Support supérieur (1) pour relier un amortisseur (3) à un châssis (2) d'un véhicule, en particulier un véhicule automobile, ledit support supérieur (1) comprenant :
- un soutien (10) comprenant un logement (100) agencé autour d'un axe d'amortisseur (X), ledit soutien (10) pouvant être ancré au châssis (2) du véhicule ;
- un groupe de montage (11) selon la revendication 1, logé au moins partiellement ou totalement dans le logement (100) et verrouillé dans ledit logement (100),
dans lequel l'élément de renforcement (112) est logé dans ledit siège de couplage (113) de manière lâche.

3. Support supérieur (1) selon la revendication 2, dans lequel l'élément de renforcement (112) est une rondelle présentant un diamètre (DR) supérieur au diamètre (D) de la surface de butée (310) de la tige (31) sur laquelle ladite rondelle vient en butée lorsqu'elle est maintenue et verrouillée entre la tige (31) et l'élément de liaison (110).

4. Support supérieur (1) selon la revendication 2 ou 3, dans lequel le siège de couplage (113) est en outre façonné pour l'encliquetage de l'élément de renforcement (112) dans le siège de couplage (113).

5. Support supérieur (1) selon l'une quelconque des revendications 2 à 4, dans lequel le groupe de montage (11) comprend des protubérances (115, 116, 117), dans lequel au moins une protubérance parmi lesdites protubérances (115, 116, 117) fait saillie à l'intérieur du logement (100) et dans lequel l'une ou toutes les protubérances définissent au moins partiellement le siège de couplage (113) et sont aptes à interdire à l'élément de renforcement (112) de sortir dudit siège de couplage (113).

6. Support supérieur (1) selon l'une quelconque des revendications 2 à 5, dans lequel les protubérances sont formées d'un seul tenant sur l'élément élastique (111).

7. Support supérieur (1) selon la revendication 5 ou 6, dans lequel les protubérances (115, 116, 117) sont agencées de manière circonférentielle autour de l'axe de cylindre (X) et sont espacées l'une de l'autre de manière circonférentielle.

8. Support supérieur (1) selon l'une quelconque des revendications 2 à 7, dans lequel l'élément de liaison (110) et l'élément de renforcement (112) sont constitués de métal et l'élément élastique est constitué d'un matériau polymère, de préférence du caoutchouc.

9. Support supérieur (1) selon l'une quelconque des revendications 2 à 8, dans lequel l'élément de liaison (110) est constitué d'un matériau différent du matériau constituant l'élément de renforcement (112).

10. Support supérieur (1) selon la revendication 9, dans lequel le matériau de l'élément de liaison (110) est de l'acier S420 et le matériau de l'élément de renforcement (112) est de l'acier S600.

11. Support supérieur (1) selon l'une quelconque des revendications 2 à 10, dans lequel le groupe de montage (11) comprend une paroi annulaire externe (114) fixée à l'élément élastique (111) et constituée d'un matériau plastique différent du matériau de l'élément élastique (111).

12. Support supérieur (1) selon l'une quelconque des revendications 2 à 11, comprenant en outre un élément de fermeture (12), agencé de manière coaxiale à l'axe d'amortisseur (X) et comprenant un trou traversant central (120) pour permettre un accès à la tige (31) de l'amortisseur (3), dans lequel ledit élément de fermeture (12) est fixé dans le logement (100) par interférence mécanique et dans lequel ledit élément de fermeture (12) comprend une base (121), par exemple circulaire, apte à agir sur l'élément élastique (111) pour le maintenir verrouillé dans le logement.

13. Ensemble amortisseur, comprenant un amortisseur (3) et un support supérieur (1) selon l'une quelconque des revendications 2 à 12, dans lequel l'amortisseur (3) comprend une tige (31) et un ressort hélicoïdal (32) agencé de manière sensiblement coaxiale à la tige (31) et soutenu directement ou indirectement par le soutien (10),
dans lequel la tige (31) est contrainte sur l'élément de liaison (110), de préférence au moyen d'un couplage à vis et contre-écrou, et dans lequel l'élément de renforcement (112) est interposé et verrouillé entre la surface de butée (310) de la tige (31) de l'amortisseur (3) et la surface inférieure (110b) de l'élément de liaison (110).

14. Procédé de construction et d'assemblage d'un support supérieur selon l'une quelconque des revendications 2 à 12, comprenant les étapes suivantes :
a) la fourniture d'un soutien (10) comprenant un logement (100) agencé autour d'un axe d'amortisseur (X), ledit soutien (10) pouvant être ancré au châssis (2) d'un véhicule ;
b) l'insertion, dans le logement (100), d'un groupe de montage comprenant un élément élastique (111) agencé de manière coaxiale à un axe d'amortisseur (X) et un élément de liaison (110) au moins partiellement incorporé dans l'élément élastique (111) et apte à être relié à une tige (31) de l'amortisseur (3) ;
c) le verrouillage du groupe de montage (11) dans le logement (100) ;
d) l'encliquetage d'un élément de renforcement (112), par exemple une rondelle, dans un siège de couplage (113) formé dans le groupe de montage et façonné pour loger l'élément de renforcement (112) de manière à interdire à l'élément de renforcement (112) de sortir de son siège (113) une fois qu'il est inséré à l'intérieur de celui-ci.

15. Procédé de construction selon la revendication 14, dans lequel l'étape c) prévoit l'insertion d'un élément de fermeture (12) dans le logement (100) par interférence mécanique de sorte que ledit élément de fermeture (12) agisse sur le groupe de montage (11) pour le maintenir verrouillé dans le logement.
